# EUROPÄISCHE PATENTSCHRIFT

(11) **EP 0 998 777 B1**
(45) Veröffentlichungstag und Bekanntmachung des Hinweises auf die Patenterteilung: **19.09.2001**
(21) Anmeldenummer: 98933420.6
(22) Anmeldetag: 27.07.1998
(51) Int. Cl.: H02J 3/18

(54) **Verfahren zum Einspeisen von Blindleistung in ein Wechselspannungsnetz**
Method for injecting reactive power into an alternating current network
Procédé pour injecter une puissance réactive dans un réseau à tension alternative

(30) Priorität: 31.07.1997 CH 183697
(43) Veröffentlichungstag der Anmeldung: 10.05.2000
(73) Patentinhaber: ABB Hochspannungstechnik AG, 8050 Zürich (CH)
(72) Erfinder: STEMMLER, Herbert, CH-5416 Kirchdorf (CH)
(74) Vertreter: ABB Patent Attorneys
(86) Internationale Anmeldenummer: CH9800321
(87) Internationale Veröffentlichungsnummer: WO9907055

(56) Entgegenhaltungen:
- DE-U- 9 416 048
- GB-A- 2 294 821
- US-A- 4 651 265

## Beschreibung

### TECHNISCHES GEBIET

Die vorliegende Erfindung bezieht sich auf das Gebiet der Leistungselektronik. Sie betrifft ein Verfahren zum Einspeisen von Blindleistung in ein Wechselspannungsnetz nach dem Oberbegriff von Patentanspruch 1. Die Erfindung betrifft weiterhin einen Wechselrichter zum Einsatz in einem solchen Verfahren.

### STAND DER TECHNIK

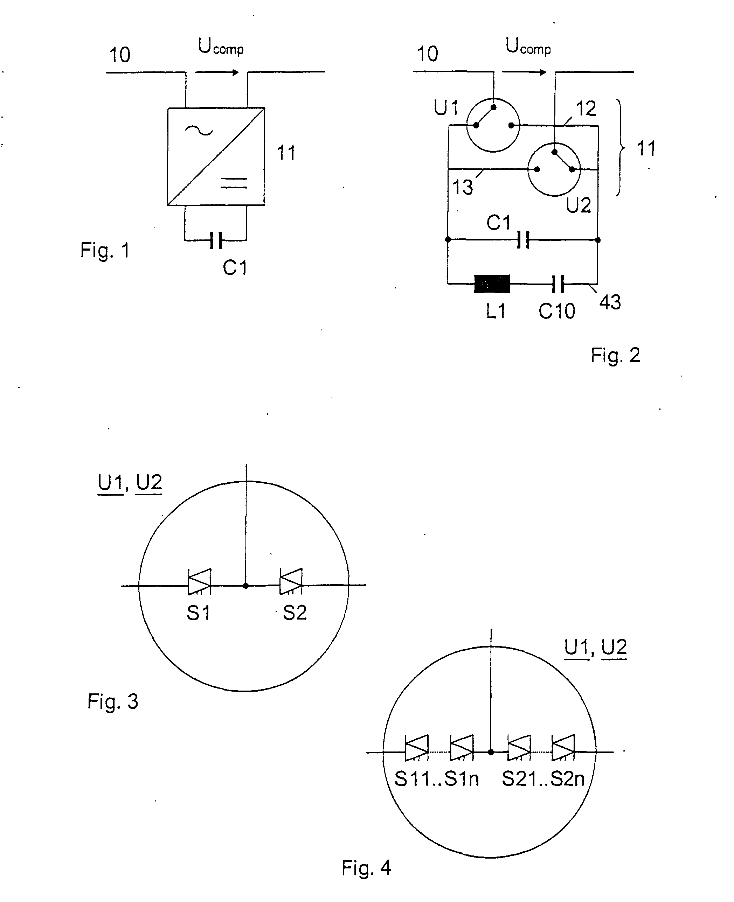

Ein Verfahren zum Einspeisen von Blindleistung in ein Wechselspannungsnetz der obengenannten Art ist in GB 2 294 821 A beschrieben. Fig. 2 zeigt ein Wechselspannungsnetz mit einer direkt seriell in die Leitung geschalteten Komponente 21 zum Einspeisen von Blindleistung. Die Komponente 21 setzt sich gemäss Fig. 3 aus mindestens einem mit abschaltbaren Leistungshalbleitern in Brückenschaltung aufgebautem Wechselrichter 31 zusammen. Die Spannung V_{AC}, mit der die Blindleistung kompensiert werden soll, wird mittels des Wechselrichters aus einer Gleichspannung erzeugt und direkt seriell in die Leitung eingekoppelt. Durch Verwendung einer halbleiterbestückten Wechselrichterbrücke kann auf einfache Weise eine weitgehend sinusförmige Kompensationsspannung mit beliebiger, vorbestimmter Phasenlage erzeugt werden. Durch die direkte serielle Einspeisung in die zu kompensierenden Leitung kann auf zusätzliche Einkopplungselemente wie Transformatoren oder dgl. verzichtet werden.

Ein Verfahren zum Einspeisen von Blindleistungen in zu einem neutralen Punkt eines Wechselspannungsnetzes führende Leitungen ist in US-A-4 651 265 beschrieben. Gemäss Fig. 9 werden aus einem Gleichstrom I_{DC} mit Hilfe von Wechselrichtern CE1, CE2 und CE3 Kompensationsspannungen erzeugt und in zu einem neutralen Punkt N führende Leitungen A, B und C über Koppeltransformatoren TA, TB und TC eingekoppelt.

### DARSTELLUNG DER ERFINDUNG

Der Erfindung, wie sie in Patentanspruch 1 angegeben ist, liegt die Aufgabe zugrunde, ein Verfahren zum Einspeisen von Blindleistung in ein Wechselspannungsnetz mit Hilfe einer Kompensationsanlage zu schaffen, bei dem der Isolationsaufwand für die Kompensationsanlage gering gehalten werden kann.

Mit dem Verfahren nach der Erfindung wird die Anforderung an die Isolation der Kompensationsanlage stark herabgesetzt. Das Verfahren benötigt lediglich eine isolationstechnisch schwach dimensionierte Kompensationsanlage und kann somit besonders kostengünstig durchgeführt werden.

In einer bevorzugten Ausführungsform umfassen die Wechselrichter jeweils zwei Halbbrücken, und werden die Halbbrücken nach Massgabe eines sinusförmigen Modulationssignals pulsdauermoduliert angesteuert. Durch die Pulsdauermodulation kann mit geringem Aufwand die vom Wechselrichter erzeugte Ausgangsspannung einem sinusförmigen Verlauf stärker angenähert werden, wodurch der Oberschwingungsgehalt verringert wird. Dies ist insbesondere dann der Fall, wenn gemäss einer bevorzugten Weiterbildung dieser Ausführungsform die Wechselrichter als 2-Punkt-Brücken ausgebildet sind, und die einzelnen Halbbrücken durch Anwendung entsprechender Trägersignale zeitversetzt getaktet werden, oder wenn die Wechselrichter als N-Punkt-Brücken (N ≥ 3) ausgebildet sind, und dass die einzelnen Halbbrücken durch Anwendung entsprechender Trägersignale derart zeitversetzt getaktet werden, dass sich die resultierende Kompensationsspannung aus einer Ueberlagerung mehrerer zeitversetzt getakteter pulsdauermodulierter Kompensationsteilspannungen ergibt.

Eine weitere Verringerung der Oberschwingungsbelastung lässt sich erreichen, wenn gemäss einer weiteren bevorzugten Ausführungsform des erfindungsgemässen Verfahrens in einer Leitung des Wechselspannungsnetzes mehrere Wechselrichter zur Erzeugung und Einkopplung einer Kompensationsspannung in Serie und/oder parallel geschaltet sind, die Wechselrichter jeweils pulsdauermoduliert angesteuert werden, und die Pulsdauermodulation in den einzelnen Wechselrichtern mit zeitversetzter Taktung erfolgt. Zugleich ergibt sich mit der Serieschaltung mehrerer Wechselrichter ein vergrösserter Betriebsbereich hinsichtlich der Spannung, und mit der Parallelschaltung ein vergrösserter Betriebsbereich hinsichtlich des Stromes.

Ist das Wechselspannungsnetz ein 3-phasiges Netz, und ist innerhalb des Netzes ein 3-phasiger Netztransformator vorgesehen, welcher als neutralen Punkt einen Sternpunkt aufweist, wird in jede der zum Sternpunkt führenden Leitungen eine entsprechende Kompensationsspannung eingekoppelt. Dies kann einerseits dadurch geschehen, dass in jede der zum Sternpunkt führenden Leitungen jeweils ein Wechselrichter zur Erzeugung und Einkopplung einer Kompensationsspannung in Serie geschaltet ist. Dies kann andererseits aber auch dadurch geschehen, dass die zum Sternpunkt führenden Leitungen an die Ausgänge eines 3-phasigen Wechselrichters angeschlossen sind. Der 3-phasige Wechselrichter hat dabei den besonderen Vorteil, dass die Kondensatoren auf der Gleichspannungseite bei gleicher Kompensationsspannung kleiner gewählt werden können, weil hier keine pulsierende Leistung zu berücksichtigen ist.

Ist das Wechselspannungsnetz 1-phasig, und ist innerhalb des Netzes ein 1-phasiger Netztransformator vorgesehen, der zumindest auf einer Seite eine Nullpunktsschaltung mit einem Nullpunkt als neutralen Punkt aufweist, wird in jede der zum Nullpunkt führenden Leitungen eine entsprechende Kompensationsspannung eingekoppelt. Dies geschieht entweder dadurch, dass in jede der zum Nullpunkt führenden Leitungen ein Wechselrichter zur Erzeugung und Einkopplung einer Kompensationsspannung in Serie geschaltet ist, oder dadurch, dass die zum Nullpunkt führenden Leitungen an die Ausgänge eines 1-phasigen Wechselrichters angeschlossen sind.

Der Wechselrichter für das erfindungsgemässe Verfahren ist dadurch gekennzeichnet, dass der Wechselrichter als N-Punkt-Brücke (N ≥ 2) ausgebildet ist.

Eine für kleinere Spannungen (z.B. ein 13-kV-Netz) geeignete Ausführungsform des Wechselrichters für das erfindungsgemässe Verfahren ist dadurch gekennzeichnet, dass in jeder der Halbbrücken nur ein Leistungshalbleiter pro Brückenzweig angeordnet ist.

Eine für grössere Spannungen (z.B. ein 400-kV-Netz) geeignete Ausführungsform des Wechselrichters für das erfindungsgemässe Verfahren ist dadurch gekennzeichnet, dass in jeder der Halbbrücken mehrere in Serie geschaltete Leistungshalbleiter pro Brückenzweig angeordnet sind.

In einer besonders bevorzugten Weiterbildung dieser Ausführungsform werden als abschaltbare Leistungshalbleiter GTOs verwendet, welche hart angesteuert werden. Unter harter Ansteuerung wird dabei eine Ansteuerung verstanden, wie sie z.B. in den Druckschriften EP-A1-0 489 945 oder WO-93/09600 oder ABB Technik 5 (1996), S.14-20 beschrieben worden sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Prinzipschaltbild einer Kompensationsschaltung mit einem zu einer Leitung in Serie geschalteten Wechselrichter;
- Fig. 2: den prinzipiellen inneren Aufbau des Wechselrichters aus Fig. 1 in Form einer 2-Punkt-Brücke mit halbleiterbestückten Umschaltern und zusätzlichem Saugkreis auf der Gleichspannungsseite;
- Fig. 3: ein Beispiel für den inneren Aufbau eines Umschalters nach Fig. 2 mit einem Leistungshalbleiter (rückwärtsleitenden GTO) pro Brückenzweig;
- Fig. 4: ein Beispiel für den inneren Aufbau eines Umschalters nach Fig. 2 mit einer Serieschaltung von mehreren Leistungshalbleitern (rückwärtsleitenden GTOs) pro Brückenzweig;
- Fig. 5: ein beispielhaftes Schema der auftretenden Spannungsformen bei einer pulsdauermodulierten Ansteuerung der 2-Punkt-Brücke nach Fig. 2;
- Fig. 6: den prinzipiellen inneren Aufbau des Wechselrichters aus Fig. 1 in Form einer 3-Punkt-Brücke mit halbleiterbestückten Umschaltern;
- Fig. 7: ein Beispiel für den inneren Aufbau eines Umschalters nach Fig. 6 mit einem Leistungshalbleiter (rückwärtsleitenden GTO) pro Brückenzweig;
- Fig. 8: ein Beispiel für den inneren Aufbau eines Umschalters nach Fig. 6 mit einer Serieschaltung von mehreren Leistungshalbleitern (rückwärtsleitenden GTOs) pro Brückenzweig;
- Fig. 9: ein beispielhaftes Schema der auftretenden Spannungsformen bei einer pulsdauermodulierten Ansteuerung der 3-Punkt-Brücke nach Fig. 6;
- Fig. 10: das Prinzipschaltbild einer Serie- und/oder Parallelschaltung von mehreren Wechselrichtern (mit zeitversetzter Taktung) zur Erhöhung des Arbeitsbereiches und Verringerung des Oberschwingungsgehalts;
- Fig. 11: ein Prinzipschaltbild eines dreiphasigen Wechselspannungsnetzes bei dem Blindleistung nach dem erfindungsgemässen Verfahren eingekoppelt wird,
- Fig. 12: ein Prinzipschaltbild eines einphasigen Wechselspannungsnetzes bei dem Blindleistung nach dem erfindungsgemässen Verfahren eingekoppelt wird,
- Fig. 13: ein Prinzipschaltbild eines Wechselspannungsnetzes, welches gegenüber dem Wechselspannungsnetz nach Fig. 11 durch Ersetzen von Wechselrichtern durch eine dreiphasige Brücke abgewandelt worden ist; und
- Fig. 14: ein Prinzipschaltbild eines Wechselspannungsnetzes, welches gegenüber dem Wechselspannungsnetz nach Fig. 12 durch Ersetzen von Wechselrichtern durch eine einphasige Brücke abgewandelt worden ist.

### WEGE ZUR AUSFÜHRUNG DER ERFINDUNG

In Fig. 1 ist das Prinzipschaltbild einer Kompensationsschaltung zum Einspeisen von Blindleistung in ein Wechselspannungsnetz in seiner einfachsten Form wiedergegeben. Innerhalb des 1-phasigen oder 3-phasigen Wechselspannungsnetzes wird zur Kompensation eine Leitung 10 ausgewählt. Die Leitung 10 wird aufgetrennt und ein Wechselrichter 11 wird direkt mit der Leitung 10 in Serie geschaltet. Aus einer Gleichspannung, die aus einem Kondensator C1 stammt, wird mittels des Wechselrichters 11 eine Wechselspannung erzeugt, die als Kompensationsspannung U_{comp} direkt in die Leitung 10 eingekoppelt wird. Der Wechselrichter 11 enthält gemäss Fig. 2 eine 2-Punkt-Brückenschaltung aus zwei Halbbrücken 12 und 13, deren Funktion durch einen Umschalter U1 bzw. U2 charakterisiert werden kann. Der Wechselrichter 11 ist mit den Ausgängen seiner Halbbrücken 12, 13 direkt an die Leitung 10 angeschlossen. Durch geeignete Ansteuerung der Umschalter U1,2 wird die am Kondensator C1 anliegende Kondensatorspannung wahlweise als positive oder negative Spannung auf die Leitung 10 gegeben.

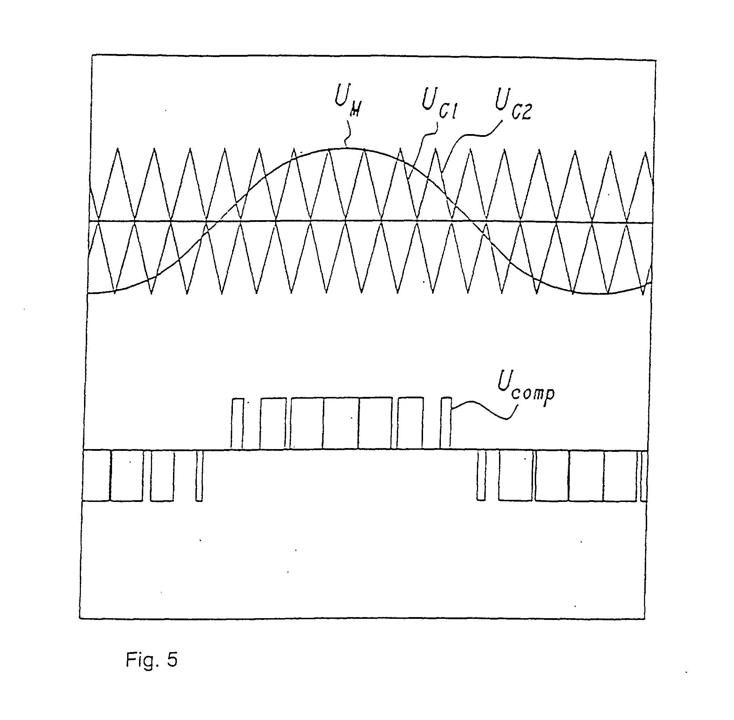

Die erzeugte Kompensationsspannung U_{comp} ist idealerweise eine sinusförmige Wechselspannung, die dem Wechselstrom auf der Leitung 10 um 90° voreilt oder um 90° nacheilt. Dazu werden Strom und Spannung auf der Leitung gemessen und aus den Messignalen in einer Steuerelektronik die Ansteuerimpulse für die Umschalter U1,2 abgeleitet. Dies geschieht vorzugsweise gemäss Fig. 5 dadurch, dass ein sinusförmiges Modulationssignal U_{M} der gewünschten Phasenlage erzeugt und in an sich bekannter Weise mit zwei dreieckförmigen Trägersignalen U_{C1}, U_{C2} verglichen wird. Aus den Schnittpunkten der Signale werden Schaltbefehle für die Umschalter U1,2 abgeleitet, die zu dem in Fig. 5 unten dargestellten pulsdauermodulierten Kompensationsspannung U_{comp} führen. Die Arbeitsweise des Wechselrichters 11 führt dazu, dass der Kondensator C1 wechselweise und mit doppelter Netzfrequenz Leistung aus dem Netz aufnimmt und Leistung an das Netz abgibt, wobei die zeitliche gemittelte Leistung Null ist. Zur Dämpfung dieser Pulsationen kann dem Kondensator C1 ein Saugkreis 43 parallel geschaltet werden, der aus einer Serienschaltung einer Induktivität L4 und einem Kondensator C10 besteht und auf die doppelte Netzfrequenz abgestimmt ist.

Die Umschalter U1,2 werden durch abschaltbare Leistungshalbleiter in der in Fig. 3 und 4 dargestellten Weise realisiert. Als bewährte Bauelemente der Leistungselektronik werden für die abschaltbaren Leistungshalbleiter GTOs (Gate-Turn-Off-Thyristoren), insbesondere rückwärtsleitende GTOs, eingesetzt. Es können aber auch IGBTs (Insulated Gate Bipolar Transistors) oder andere abschaltbare Bauelemente verwendet werden. Der Spannungsbereich derartiger Leistungshalbleiter ist begrenzt. Bei kleineren Netzspannungen (z.B. 13 kV) werden in den Brückenzweigen gemäss Fig. 1 einzelne Leistungshalbleiter S1 und S2 eingesetzt. Bei hohen Netzspannungen (z.B. 400 kV) werden in den Brückenzweigen gemäss Fig. 4 Serienschaltungen von vielen (n) Leistungshalbleitern S11,..,S1n bzw. S21,..,S2n eingesetzt. Werden GTOs in Serienschaltung verwendet, müssen besondere Vorkehrungen getroffen werden, um das gleichzeitige Schalten der einzelnen GTO-Elemente sicherzustellen. Durch die Anwendung einer "harten" Ansteuerung ist eine exakte Ansteuerung mehrere in Serie geschalteter GTOs möglich. Zu den charakteristischen Eigenschaften und der schaltungstechnischen Realisierung der "harten" Ansteuerung sei auf die eingangs genannten Druckschriften aus dem Stand der Technik verwiesen.

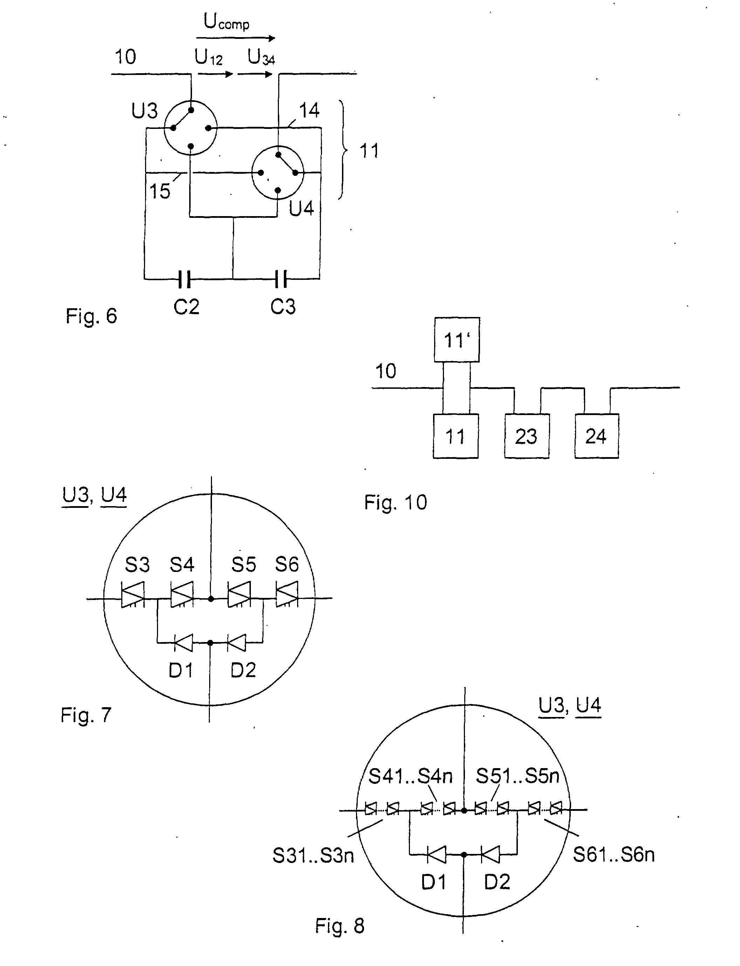

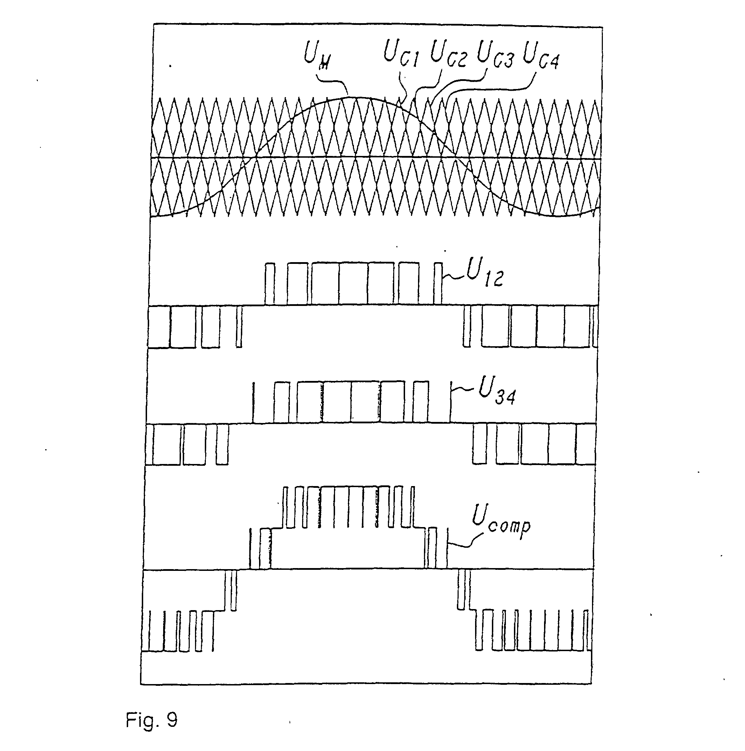

Neben der bereits beschriebenen 2-Punkt-Brücke kann mit Vorteil aber auch eine 3-Punkt-Brücke oder noch allgemeiner eine N-Punkt-Brücke zur Erzeugung der Kompensationsspannung U_{comp} herangezogen werden. Die 3-Punkt-Brücke umfasst gemäss Fig. 6 zwei Umschalter U3 und U4 mit jeweils 3 Umschaltpunkten in zwei Halbbrücken 14 und 15, die wahlweise die beiden Enden oder den Mittelabgriff einer Serieschaltung aus zwei Kondensatoren C2, C3 mit dem jeweiligen Brückenausgang verbinden. Auf diese Weise werden zwei Kompensationsteilspannungen U₁₂ und U₃₄ erzeugt, die sich am Ausgang des Wechselrichters 11 zu der Kompensationsspannung U_{comp} addieren. Der eine Vorteil der 3-Punkt-Brücke liegt darin, dass zur Erzeugung derselben Kompensationsspannung statt eines grossen zwei kleinere Kondensatoren genommen werden können. Der andere Vorteil liegt darin, dass bei einer zeitversetzten Taktung der auch hier vorzugsweise angewandten Pulsdauermodulation, wie sie in Fig. 9 durch die phasenverschobenen Trägersignale U_{C1},..,U_{C4} angedeutet ist, der Oberschwingungsanteil für die aus den (zeitversetzt getakteten) Kompensationsteilspannungen U₁₂ und U₃₄ zusammengesetzte Kompensationsspannung U_{comp} deutlich verringert werden kann. Die N-Punkt-Brücke ergibt sich, wenn analog zur 3-Punkt-Brücke Umschalter mit N Umschaltpunkten in den Halbbrücken eingesetzt werden.

Der innere Aufbau der Umschalter U3,4 aus Fig. 6 hat vorzugsweise die in Fig. 7 und 8 dargestellte Form. Bei kleineren Netzspannungen sind in den Brückenzweigen gemäss Fig. 7 einzelne Leistungshalbleiter S3,..,S6 in Form von rückwärtsleitenden GTOs mit entsprechenden Dioden D1 und D2 verschaltet. Bei hohen Netzspannungen treten an die Stelle der einzelnen Leistungshalbleiter jeweils Serienschaltungen aus n Leistungshalbleitern S31,..,S3n bis S61,..,S6n, die im Falle von GTOs wiederum "hart" angesteuert sind. Anstelle der GTOs können aber wiederum auch andere abschaltbare Leistungshalbleiter verwendet werden.

Der Betriebsbereich, in welchem eine Kompensation möglich ist, wird bei dem Wechselrichter 11 massgeblich durch die Amplitude der Kompensationsspannung U_{comp} bestimmt, die sich ihrerseits im wesentlichen nach der Spannung an dem Kondensator C1 (bei der 2-Punkt-Brücke) bzw. an den Kondensatoren C2 und C3 (bei der 3-Punkt-Brücke) richtet.

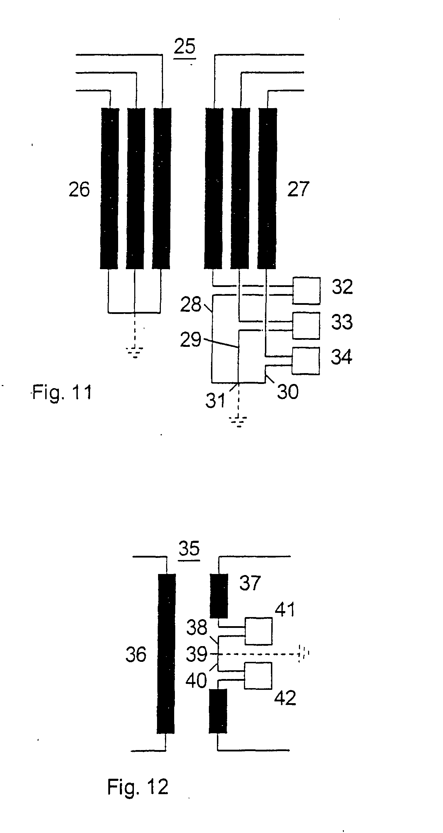

Zusätzlich zu einer Aenderung des Betriebsbereiches des Wechselrichters, die durch eine Aenderung im Wechselrichter oder in seiner Beschaltung bewirkt werden kann, lässt sich der erreichbare Kompensationsgrad auch dadurch erhöhen, dass gemäss Fig. 10 in einer Leitung 10 des Netzes mehrere (gleichartige) Wechselrichter 11, 23 und 24 in Serie und oder parallel (Wechselrichter 11, 11') geschaltet werden. Die von den einzelnen Wechselrichtern erzeugten Kompensationsspannungen addieren sich dann zu einer resultierenden, grösseren Kompensationsspannung. Besonders vorteilhaft ist bei einer solchen Serienschaltung, dass durch eine untereinander zeitversetzte Taktung der einzelnen Wechselrichter 11, 11', 23 und 24 der Oberschwingungsanteil noch weiter reduziert werden kann.

Besondere Vorteile bringt die transformatorlose Serienkompensation bei Durchführung des erfindungsgemässen Verfahrens in einem Wechselspannungsnetz mit Netztransformatoren, die eine Niederpotentialseite mit einem neutralen Punkt aufweisen. Ist - wie in Fig. 11 gezeigt - das Netz ein dreiphasiges Wechselstromnetz und der Netztransformator 25 zu einem Stern geschaltet (Primärseite 26, Sekundärseite 27), kann die Kompensation auf der Niederpotentialseite am neutralen Punkt (Sternpunkt 31) des Netztransformators 25 erfolgen. Dazu werden mit den zum Sternpunkt 31 führenden Leitungen 28, 29, 30 jeweils kompensierende Wechselrichter 32, 33 und 34 in Serie geschaltet. Durch die Anordnung der Wechselrichter auf der Niederpotentialseite lässt sich der Isolationsgrad stark herabsetzen, was zu einer Vereinfachung und Verbilligung der Anlage führt.

Bei einem 1-phasigen Netz mit einem 1-phasigen Netztransformator 35 (Fig. 12; Primärseite 36, Sekundärseite 38) mit einem Nullpunkt als neutralem Punkt wird eine entsprechende Anordnung der Kompensationsschaltung auf niedrigem Potential dadurch verwirklicht, dass Wechselrichter 41, 42 mit den zum Nullpunkt 39 führenden Leitungen 38, 40 in Serie geschaltet werden. Es ist aber auch denkbar, anstelle der beiden Wechselrichter 41, 42 nur einen Wechselrichter (41 oder 42) zu verwenden.

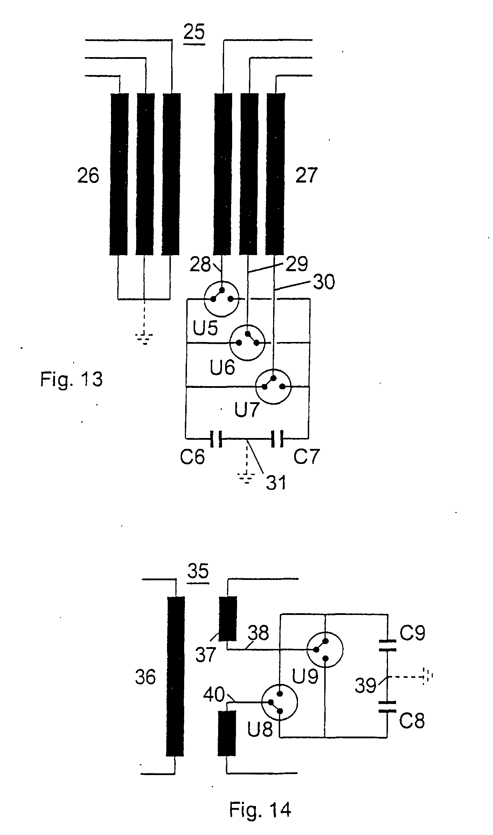

Die Kompensationsanordnungen nach Fig. 11 und 12, die jeweils mehrere Wechselrichter 32,..,34 bzw. 41, 42 umfassen, können durch geschicktes Zusammenfassen der Wechselrichter in einer Brücke vereinfacht werden. Die aus Fig. 11 hervorgehende vereinfachte Anordnung ist in Fig. 13 wiedergegeben. Die Leitungen 28, 29 und 30 werden in diesem Fall an die Ausgänge eines 3-phasigen Wechselrichters angeschlossen, die über gesteuerte Umschalter U5, U6 und U7 gemäss Fig. 3, 4 wahlweise mit den Enden einer Serieschaltung aus zwei aufgeladenen Kondensatoren C6 und C7 verbunden werden, deren Mittelabgriff an den Sternpunkt 31 angeschlossen ist. Es ist aber auch denkbar, die Schaltungen aus Fig. 11 und 13 miteinader zu kombinieren, d.h., bei der Schaltung aus Fig. 13 in die Leitungen 28, 29 und 30 zusätzlich einzelne Wechselrichter (wie die Wechselrichter 32, 33 und 34 in Fig. 11) in Serie zu schalten, um die Flexibilität der Kompensationsschaltung zu erhöhen.

Die analoge Vereinfachung für die Anordnung nach Fig. 12 ist in Fig. 14 wiedergegeben. Hier werden die Leitungen 38, 40 über Umschalter U8, U9 wahlweise mit den Enden einer Serieschaltung aus geladenen Kondensatoren C8 und C9 verbunden, deren Mittelabgriff an den Nullpunkt 39 angeschlossen ist. In den in Fig. 11 bis 14 dargestellten Fällen kann der neutrale Punkt (Sternpunkt 31 bzw.

Nullpunkt 39) geerdet sein (gestrichelt eingezeichnet). Eine solche Erdung ist aber nicht zwingend notwendig.

### BEZEICHNUNGSLISTE

- 10: Leitung
- 11,11': Wechselrichter
- 12,..,15: Halbbrücke
- 23, 24: Wechselrichter
- 25,35: Netztransformator
- 26,36: Primärseite
- 27,37: Sekundärseite
- 28,..,30: Leitung
- 31: Sternpunkt
- 38,40: Leitung
- 39: Nullpunkt
- 41,42: Wechselrichter
- 43: Saugkreis
- C1,..,C10: Kondensator
- D1,2: Diode
- L1: Induktivität
- S1,..,S6: Leistungshalbleiter (abschaltbar)
- S11,..,S6n: Leistungshalbleiter (abschaltbar)
- U1,..,U9: Umschalter
- UM: Modulationssignal (sinusförmig)
- U_{C1},...,U_{C4}: Trägersignal (dreickförmig)
- U₁₂,U₃₄: Kompensationsteilspannung
- U_{comp}: Kompensationsspannung

## Patentansprüche

1. Verfahren zum Einspeisen von Blindleistung in ein Wechselspannungsnetz, bei welchem Verfahren für wenigstens eine Leitung (10, 28,..,30; 38, 40) des Netzes eine zum Strom in der Leitung (10, 28,..,30; 38, 40) phasenverschobene Kompensationsspannung (U_{comp}) erzeugt und in die Leitung (10, 28,..,30; 38, 40) direkt seriell eingekoppelt wird und die Kompensationsspannung (U_{comp}) aus einer Gleichspannung mittels eines mit abschaltbaren Leistungshalbleitern (S1,..,S6; S11,..,S6n) in Brückenschaltung aufgebauten Wechselrichters (11; 23, 24; 32,..,34; 41, 42) erzeugt wird, **dadurch gekennzeichnet, dass** die Kompensationsspannung (U_{comp}) in wenigstens eine der zum auf niedrigem Potential liegenden, neutralen Punkt (31, 39) eines Netztransformators (25, 35) des Wechselspannungsnetzes führenden Leitungen (28,..,30; 38, 40) eingekoppelt wird.

2. Verfahren nach Anspruch 1, **dadurch gekennzeichnet, dass** die Wechselrichter (11; 19,..,21; 41, 42) jeweils zwei Halbbrücken (12, 13 bzw. 14, 15) umfassen, und dass die Halbbrücken (12, 13 bzw. 14, 15) nach Massgabe eines sinusförmigen Modulationssignals (U_{M}) pulsdauermoduliert angesteuert werden.

3. Verfahren nach Anspruch 2, **dadurch gekennzeichnet, dass** die Wechselrichter (11; 19,..,21; 41, 42) als 2-Punkt-Brücken ausgebildet sind, und dass die einzelnen Halbbrücken (12, 13) durch Anwendung entsprechender Trägersignale (U_{C1}, U_{C2}) zeitversetzt getaktet werden.

4. Verfahren nach Anspruch 2, **dadurch gekennzeichnet, dass** die Wechselrichter (11; 19,..,21; 41, 42) als N-Punkt-Brücken (N ≥ 3) ausgebildet sind, und dass die einzelnen Halbbrücken (14, 15) durch Anwendung entsprechender Trägersignale (U_{C1},..,U_{C4}) derart zeitversetzt getaktet werden, dass sich die resultierende Kompensationsspannung (U_{comp}) aus einer Ueberlagerung mehrerer zeitversetzt getakteter pulsdauermodulierter Kompensationsteilspannungen (U₁₂, U₃₄) ergibt.

5. Verfahren nach einem der Ansprüche 1 bis 4, **dadurch gekennzeichnet, dass** das Wechselspannungsnetz ein 3-phasiges Netz ist, dass innerhalb des Netzes ein 3-phasiger Netztransformator (25) vorgesehen ist, welcher als neutralen Punkt einen Sternpunkt (31) aufweist, und dass in jede der zum Sternpunkt (31) führenden Leitungen (28,..,30) eine entsprechende Kompensationsspannung (U_{comp}) eingekoppelt wird.

6. Verfahren nach Anspruch 5, **dadurch gekennzeichnet, dass** in jede der zum Sternpunkt (31) führenden Leitungen (28,..,30) jeweils ein Wechselrichter (32,..,34) zur Erzeugung und Einkopplung einer Kompensationsspannung (U_{comp}) in Serie geschaltet ist, und/oder dass die zum Sternpunkt (31) führenden Leitungen (28,..,30) an die Ausgänge eines 3-phasigen Wechselrichters (U5,..,U7; C6,7) angeschlossen sind.

7. Verfahren nach Anspruch 6, **dadurch gekennzeichnet, dass** die zum Sternpunkt (31) führenden Leitungen (28,..,30) an die Ausgänge eines 3-phasigen Wechselrichters (U5,..,U7; C6,7) angeschlossen sind, und dass der 3-phasige Wechselrichter als N-Punkt-Brücke (N ≥ 2) ausgebildet ist.

8. Verfahren nach einem der Ansprüche 1 bis 4, **dadurch gekennzeichnet, dass** das Wechselspannungsnetz 1-phasig ist, dass innerhalb des Netzes ein 1-phasiger Netztransformator (35) vorgesehen ist, der zumindest auf einer Seite eine Nullpunktsschaltung mit einem Nullpunkt (39) als neutralen Punkt aufweist, und dass in jede der zum Nullpunkt (39) führenden Leitungen (38, 40) eine entsprechende Kompensationsspannung (U_{comp}) eingekoppelt wird.

9. Verfahren nach Anspruch 8, **dadurch gekennzeichnet, dass** in jede der zum Nullpunkt (39) führenden Leitungen (38, 40) ein Wechselrichter (41, 42) zur Erzeugung und Einkopplung einer Kompensationsspannung (U_{comp}) in Serie geschaltet ist.

10. Verfahren nach Anspruch 8, **dadurch gekennzeichnet, dass** die zum Nullpunkt (39) führenden Leitungen (38, 40) an die Ausgänge eines 1-phasigen Wechselrichters (U8,9; C8,9) angeschlossen sind.

11. Verfahren nach einem der Ansprüche 1 bis 10, **dadurch gekennzeichnet, dass** in dem Wechselrichter (11; 23, 24; 32,..,34; 41, 42) mehrere in Serie geschaltete Leistungshalbleiter (S11,..,S1n;...;S61,..,S6n) pro Brückenzweig angeordnet sind.

12. Verfahren nach einem der Ansprüche 1 bis 11, **dadurch gekennzeichnet, dass** als abschaltbare Leistungshalbleiter (S1,..,S6; S11,..,S6n) IGBTs verwendet werden.

13. Verfahren nach einem der Ansprüche 1 bis 11, **dadurch gekennzeichnet, dass** als abschaltbare Leistungshalbleiter (S1,..,S6; S11,..,S6n) GTOs verwendet werden und dass die in Serie geschalteten GTOs hart angesteuert werden.

## Claims

1. Method for feeding reactive power into an AC grid system, in the case of which method at least one line (10, 28,..,30; 38, 40) of the grid system has a compensation voltage (U_{comp}) produced for it, which compensation voltage (U_{comp}) is phase-shifted with respect to the current in the line (10, 28,..,30; 38, 40) and is injected in series directly into the line (10, 28,..,30; 38, 40), and the compensation voltage (U_{comp}) is produced from a DC voltage by means of an inverter (11; 23, 24; 32,.., 34; 41, 42), which is formed by gate turn-off power semiconductors (S1,..,S6; S11,..,S6n) in a bridge circuit, **characterized in that** the compensation voltage (U_{comp}) is injected into at least one of the lines (28,.., 30; 38, 40) leading to the neutral point (31, 39), which is at low potential, of a network transformer (25, 35) of the AC grid system.

2. Method according to Claim 1, **characterized in that** the inverters (11; 19,..,21;41, 42) each comprise two half-bridges (12, 13 and 14, 15), and in that the half-bridges (12, 13 and 14, 15) are driven in a pulsewidth-modulated manner on the basis of a sinusoidal modulation signal (U_{M}).

3. Method according to Claim 2, **characterized in that** the inverters (11; 19,..,21; 41, 42) are designed as two-point bridges, and in that the individual half-bridges (12, 13) are pulsed at different times by using appropriate carrier signals (U_{C1}, U_{C2}).

4. Method according to Claim 2, **characterized in that** the inverters (11; 19,..,21; 41, 42) are designed as N-point bridges (N ≥ 3), and in that the individual half-bridges (14, 15) are pulsed at different times by using appropriate carrier signals (U_{C1},..,U_{C4}) in such a manner that the resultant compensation voltage (U_{comp}) is obtained from superimposition of a plurality of pulsewidth-modulated partial compensation voltages (U₁₂, U₃₄) which are pulsed at different times.

5. Method according to one of Claims 1 to 4, **characterized in that** the AC grid system is a 3-phase grid system, in that a 3-phase network transformer (25) is provided within the grid system, which 3-phase network transformer (25) has a star point (31) as the neutral point, and in that an appropriate compensation voltage (U_{comp}) is injected into each of the lines (28,..,30) which lead to the start point (31).

6. Method according to Claim 5, **characterized in that** an inverter (32,..,34) for producing and injecting a compensation voltage (U_{comp}) is in each case connected in series in each of the lines (28,..,30) leading to the star point (31), and/or in that the lines (28,..,30) which lead to the star point (31) are connected to the outputs of a 3-phase inverter (U5,..,U7; C6, 7).

7. Method according to Claim 6, **characterized in that** the lines (28,..,30) which lead to the star point (31) are connected to the outputs of a 3-phase inverter (U5,..,U7; C6, 7), and in that the 3-phase inverter is designed as an N-point bridge (N ≥ 2).

8. Method according to one of Claims 1 to 4, **characterized in that** the AC grid system is a single-phase system, in that a single-phase network transformer (35) is provided within the grid system, which single-phase network transformer (35) has, at least on one side, a zero-point circuit with a zero point (39) as the neutral point, and in that an appropriate compensation voltage (U_{comp}) is injected into each of the lines (38, 40) leading to the zero point (39).

9. Method according to Claim 8, **characterized in that** an inverter (41, 42) for producing and injecting a compensation voltage (U_{comp}) is connected in series in each of the lines (38, 40) leading to the zero point (39).

10. Method according to Claim 8, **characterized in that** the lines (38, 40) which lead to the zero point (39) are connected to the outputs of a single-phase inverter (U8, 9; C8, 9).

11. Method according to one of Claims 1 to 10, **characterized in that** a plurality of series-connected power semiconductors (S11,..,S1n;..;S61,..,S6n) are arranged per bridge arm in the inverter (11; 23, 24; 32,.., 34; 41, 42).

12. Method according to one of Claims 1 to 11, **characterized in that** IGBTs are used as the gate turn-off power semiconductors (S1,..,S6; S11,..,S6n).

13. Method according to one of Claims 1 to 11, **characterized in that** GTOs are used as the gate turn-off power semiconductors (S1,..,S6; S11,..,S6n), and in that the series-connected GTOs are hard driven.

## Revendications

1. Procédé d'injection d'une puissance réactive dans un réseau à tension alternative, dans lequel procédé, pour au moins un conducteur (10, 28, ..., 30; 38, 40) du réseau, une tension de compensation (U_{COMP}) déphasée par rapport au courant dans le conducteur (10, 28, ..., 30; 38, 40) est créée et est couplée directement en série dans le conducteur (10, 28, ..., 30; 38, 40), et la tension de compensation (U_{COMP}) est créée à partir d'une tension continue au moyen d'un onduleur (11; 23, 24; 32, ..., 34; 41, 42) constitué de semi-conducteurs de puissance déclenchables (S1, ..., S6; S11, ..., S6n) branchés en pont, **caractérisé en ce que** la tension de compensation (U_{COMP}) est couplée dans au moins l'un des conducteurs (28, ..., 30; 38, 40) qui conduisent au point neutre (31, 39) placé à un potentiel bas, d'un transformateur de réseau (25, 35) du réseau à tension alternative.

2. Procédé selon la revendication 1, **caractérisé en ce que** les onduleurs (11; 19, ..., 21; 41, 42) comprennent chacun deux demi-ponts (12, 13 et 14, 15), et en ce que les demi-ponts (12, 13 et 14, 15) sont commandés par modulation de la durée des impulsions à partir d'un signal de modulation (U_{M}) sinusoïdal.

3. Procédé selon la revendication 2, **caractérisé en ce que** les onduleurs (11; 19, ..., 21; 41, 42) sont configurés comme ponts à deux points, et en ce que les demi-ponts individuels (12, 13) sont cadencés de manière décalée dans le temps par recours à des signaux porteurs (U_{C1}, U_{C2}) appropriés.

4. Procédé selon la revendication 2, **caractérisé en ce que** les onduleurs (11; 19, ..., 21; 41, 42) sont configurés comme ponts à N points (N ≥ 3) et en ce que les demi-ponts (14, 15) individuels sont cadencés de manière décalée dans le temps par application de signaux porteurs (U_{C1}, ..., U_{C4}) de telle sorte que la tension de compensation (U_{COMP}) résultante est obtenue par superposition de plusieurs tensions de compensation (U₁₂, U₃₄) en impulsions de durée modulée et cadencées de manière décalée dans le temps.

5. Procédé selon l'une des revendications 1 à 4, **caractérisé en ce que** le réseau à tension alternative est un réseau triphasé, en ce que dans le réseau est prévu un transformateur de réseau (25) triphasé qui présente comme point neutre un centre (31) d'étoile, et en ce qu'une tension de compensation (U_{COMP}) appropriée est couplée dans chacun des conducteurs (28, ..., 30) conduisant au centre (31) de l'étoile.

6. Procédé selon la revendication 5, **caractérisé en ce qu'**un onduleur (32, ..., 34) pour la création et le couplage d'une tension de compensation (U_{COMP}) est branché en série dans chacun des conducteurs (28, ..., 30) conduisant au centre (31) de l'étoile et/ou en ce que les conducteurs (28, ..., 30) conduisant au centre (31) de l'étoile sont raccordés aux sorties d'un onduleur (U5, ..., U7; C6, 7) triphasé.

7. Procédé selon la revendication 6, **caractérisé en ce que** les conducteurs (28, ..., 30) conduisant au centre (31) de l'étoile sont raccordés aux sorties d'un onduleur (U5, ..., U7; C6,7) triphasé et en ce que l'onduleur triphasé est configuré comme pont à N points (N ≥ 2).

8. Procédé selon l'une des revendications 1 à 4, **caractérisé en ce que** le réseau à tension alternative est monophasé, en ce que dans le réseau est prévu un transformateur de réseau (35) monophasé qui présente au moins sur un côté un circuit à point zéro avec un point zéro (39) comme point neutre, et en ce qu'une tension de compensation (U_{COMP}) appropriée est couplée dans chacun des conducteurs (38, 40) conduisant au point zéro (39).

9. Procédé selon la revendication 8, **caractérisé en ce qu'**un onduleur (41, 42) pour la création et le couplage d'une tension de compensation (U_{COMP}) est raccordé en série dans chacun des conducteurs (38, 40) conduisant au point zéro (39).

10. Procédé selon la revendication 8, **caractérisé en ce que** les conducteurs (38, 40) conduisant au point zéro (39) sont raccordés aux sorties d'un onduleur (U8,9; C8,9) monophasé.

11. Procédé selon l'une des revendications 1 à 10, **caractérisé en ce que** dans l'onduleur (11; 23, 24; 32, ..., 34; 41, 42), plusieurs semi-conducteurs de puissance (S11, ..., S1n; ...; S61, ..., S6n) sont disposés dans chaque branche du pont.

12. Procédé selon l'une des revendications 1 à 11, **caractérisé en ce que** comme semi-conducteurs de puissance déclenchables (S1, ..., S6; S11, ..., S6n), on utilise des IGBT.

13. Procédé selon l'une des revendications 1 à 11, **caractérisé en ce que** comme semi-conducteurs de puissance déclenchables (S1, ..., S6; S11, ..., S6n), on utilise des GTO, et en ce qu'une commande dure est appliquée aux GTO branchés en série.
